# EUROPEAN PATENT SPECIFICATION

(11) **EP 3 299 288 B1**
(45) Date of publication and mention of the grant of the patent: **26.05.2021**
(21) Application number: 17192688.4
(22) Date of filing: 22.09.2017
(51) Int. Cl.: B64D 35/08, B64C 27/14

(54) **HIGH SPEED ENGINE REDUCTION GEARBOXES**
HOCHGESCHWINDIGKEITSMOTORUNTERSETZUNGSGETRIEBE
BOÎTES DE RÉDUCTION POUR MOTEUR À GRANDE VITESSE

(30) Priority: 23.09.2016 US 201662399097 P; 17.11.2016 US 201662423371 P; 20.09.2017 US 201715709548
(43) Date of publication of application: 28.03.2018
(73) Proprietor: Bell Helicopter Textron Inc., Fort Worth, TX 76101 (US)
(72) Inventor: Poster, Scott David, Arlington, TX 76016 (US); Riley, Walter, Fort Worth, TX 76101 (US); Cope, Gary, Keller, TX 76248 (US); Speller Jr., Charles Hubert, Flower Mound, TX 75028 (US)
(74) Representative: Barker Brettell LLP

(56) References cited:
- EP-A1- 0 023 393
- EP-A1- 0 739 815
- WO-A1-02/061298
- WO-A2-2008/091341
- US-A1- 2005 201 863
- US-A1- 2006 266 883
- US-B1- 6 302 356
- Anonymous: "Sikorsky Archives | S-65/H-53A/D Sea Stallion/ H-53E Super Stallion", , 31 July 2013 (2013-07-31), XP055591783, Retrieved from the Internet: URL:https://www.sikorskyarchives.com/S-65H -53D%20SEA%20STALLION.php [retrieved on 2019-05-24]
- Anonymous: "CH-53E New Ep's Flashcards", , 1 November 2016 (2016-11-01), XP055591788, Retrieved from the Internet: URL:https://www.flashcardmachine.com/ch-53 eneweps.html [retrieved on 2019-05-24]
- XP055592953

## Description

### TECHNICAL FIELD OF THE INVENTION

The present invention relates in general to the field of gears for rotorcraft, and more particularly, to high-speed gearing and continued torque transmission in the event of a gear failure, including a loss-of-lubrication event.

### BACKGROUND OF THE INVENTION

Without limiting the scope of the invention, its background is described in connection with aircraft gearboxes.

Since their inception, rotorcraft and rotorcraft drive systems have been improved to reduce the possibility of failure during flight. Toward that end, a number of modifications have been made to drive systems to improve reliability. However, despite advances in materials and design, a number of failures continue to occur that affect rotorcraft performance. One example of a problem with current rotorcraft drive systems is that, in some instances, the failure of single drive system component leads to failure of the entire drive system. Another example is a loss of lubrication event that causes the seizing of drive system subcomponents such as gearboxes or accessories connected to the main rotor gearbox.

More particularly, the failure of a single gearbox or shaft connected to the main rotor gearbox can significantly impact operations. For example, if there is a loss of lubrication to a gearbox, the gearbox seizes up causing damage to upstream or downstream components. The same can occur when a shaft becomes unbalanced (or breaks), which can damage couplings, gearboxes and even the main rotor gearbox. Unfortunately, when a portion of a drive system experiences a failure or reduction in performance, the concomitant reduction in power leads to challenges with flight performance.

Thus, a need remains for improving the overall safety and reliability of rotorcraft drive systems that include the connections between the engines and the main rotor gearbox, reduction and accessory gearboxes, shafts, generators, oil pumps, and accessories connected to the main rotor gearbox.

Prior art gearboxes typically require external oil coolers and have pressurized oil leak paths. Further, they typically have external grease packed bearings. All of these features are potential failure points and require frequent maintenance and servicing. Systems and methods that reduce or eliminate dependence on such features are desirable.

Prior art rotorcraft drive systems use high-speed gearing systems that are susceptible to inabilities to continue torque transmission, particularly in a loss-of-lubrication scenario, and that provide potential failure points that decrease safety. One such gearbox is taught in U.S. Patent No. 8,740,565, issued to Perkinson, and entitled, "Modular Counter Rotating Propeller System." Briefly, this inventor teaches a self-contained counter rotating turbo prop system that is driven by a gas turbine engine through a reduction gearbox. A gear train is housed separately from the reduction gearbox that provides the counter-rotation of a first and a second plurality of propeller blades. The entire counter-rotating propeller system is disposed within cowlings and is separate from the gas turbine engine and reduction gearbox.

Another such gearbox is taught in U.S. Patent Publication No. 2016/0281609, filed by Mitrovic, et al., entitled "Reduction Gearbox For a Gas Turbine Engine." These applicants describe a reduction gearbox for a gas turbine engine that includes a first gear reduction stage having an input gear adapted to be driven by a turbine output shaft. The input gear transfers power received from the turbine output shaft laterally away from the input gear to an input speed gear. Each input speed gear engages an output speed gear that defines a main speed reduction gear set, and the main speed reduction gear sets are laterally spaced apart from one another to define a gap. The gearbox has a second gear reduction stage driven by the output speed gears, the second stage adapted to drive an engine output shaft.

Helicopter Drive System On-condition Maintenance Capability (USAAMRDL-TR-75-57, ADA028414, https://apps.dtic.mil/dtic/tr/fulltext/u2/a028414.pdf) discloses the drive train system of a CH53/CH54 rotorcraft including the main gearbox and the two reduction gearboxes, also called nose gearboxes.

US6302356B1 discloses a twin turbine engine helicopter having a two-stage main reduction gearbox, the input stage having a speed reduction ratio exceeding 5.5:1, into an epicyclic gear train second stage ratio about 6:1 for approximately 30:1 or higher overall ratio output to the main rotor. The first stage uses face gears, or bevel gears, with a reduction greater than 5.5:1 and a second stage epicyclic gear train using single or double row helical or spur gears. The first stage gears are straddle mounted in the housing.

EP0739815A1 discloses engines directly coupled to an engine deceleration device composed of a traction speed change mechanism and a planetary speed change mechanism, and is decelerated at a desired speed change ratio, and rotate and drive a collector gear and a main rotor shaft. The collector gear rotates and drives accessories and a tail rotor through a second traction speed change mechanism changing speed in inverse number of the speed change ratio of the traction speed change mechanisms. The rotating speed of the engines can be continuously decelerated at an arbitrary speed change ratio, and an engine deceleration device of small size, light weight, and low loss is realized.

WO2008/091341A2 discloses a lubrication system including an external pump system which pumps air out of the housing and develop negative pressure therein in response to a loss of lubrication condition. The negative pressure operates as an air lock to minimize or prevent lubricating oil loss from the housing while an internal lubrication system continues to distribute lubricating oil - which although now increasing in temperature - still operates to lubricate the gearbox components. For further ballistic tolerance, the housing is a compound housing that reduces or closes the penetration and further minimizes lubricating oil and negative pressure loss.

WO02061298A1 discloses an anti-flail cup having a flange attachable to an end of a shaft. The flange has a perimeter and a face. A shoulder extends from the perimeter of the flange and generally perpendicularly to the face of the flange. The shoulder of the anti-flail cup surrounds a coupling between two shafts and retains the shaft ends if the coupling fails.

US2006/266883A1 discloses a gearbox of a high speed compound rotary-wing aircraft including a main module, an input module and a translational thrust module. The input module receives power from the engines to drive a dual, contra-rotating, coaxial main rotor system and a translational thrust system which provides significant translational thrust generally parallel to an aircraft longitudinal axis. Each of a multiple of engine drives the input module such that power is distributed to the main module and the translational thrust module.

US2005/201863A1 discloses an active vibration control (AVC) system includes a shaft-driven gearbox mounted force generator (GMFG) mounted to a main rotor transmission. The GMFGs receive shaft power from an output shaft driven by the main rotor transmission and/or engine-to-transmission gearbox to avoid separate drive motors.

The drawbacks of prior art gearing systems make systems and methods of redundant, separate, self-contained, high-speed gearboxes desirable.

### SUMMARY OF THE INVENTION

According to an aspect of the invention, there is provided an engine reduction gear system, as defined in claim 1. In an embodiment, each shaft connects via a clutch to the main rotor gearbox, wherein each engine reduction gearbox can be separately connected and disconnected from the main rotor gearbox by the clutch. In another embodiment, each shaft is defined further as comprising a one-piece shaft with integral couplings and an anti-flail protection system. In another embodiment, the three or more gears comprise a two mesh reduction for reducing engine output speed to a lower main rotor gearbox input speed. In another embodiment, a flexible coupling is positioned between one of the engine reduction gearboxes and the main rotor gearbox. In another aspect, each of the two engine reduction gearboxes, the shafts, or both are connected to the main rotor gearbox via a clutch. In another aspect, at least one gear of each of the two engine reduction gearboxes connects to the engine via a one-piece splined shaft piloted at each end.

In another aspect of the invention, there is provided a method of providing redundant power to a main rotor gearbox from two or more engines, as defined in claim 2. In one embodiment, the method further comprises connecting each shaft to the main rotor gearbox via a clutch, wherein each engine reduction gearbox can be separately connected and disconnected from the main rotor gearbox by the clutch. In another embodiment, each shaft is defined further as comprising a one-piece shaft with integral couplings and an anti-flail protection system. In another embodiment, the three or more gears comprise a two mesh reduction for reducing engine output speed to a lower main rotor gearbox input speed. In one embodiment, the method further comprises positioning a flexible coupling between one of the engine reduction gearboxes and the main rotor gearbox. In another embodiment, the method further comprises positioning one or more clutches between each input of the main rotor gearbox and its respective engine reduction gearboxes, the shafts, or both. In another embodiment, at least one gear of each of the two engine reduction gearboxes connects to the engine via a one-piece splined shaft piloted at each end.

In another embodiment, the present invention includes a rotorcraft, comprising: a fuselage; one or more aircraft engines in or on the fuselage; at least two self-contained, independent engine reduction gearboxes, each capable of connecting to at least one aircraft engine, wherein each of the engine reduction gearboxes provides redundant, reduced speed to a main rotor gearbox via a shaft, wherein the engine speed is reduced prior to entering the main rotor gearbox.

In addition to the foregoing, various other method, system, and apparatus aspects are set forth in the teachings of the present disclosure, such as the claims, text, and drawings forming a part of the present disclosure.

The foregoing is a summary and thus contains, by necessity, simplifications, generalizations, and omissions of detail. Consequently, those skilled in the art will appreciate that this summary is illustrative only and is not intended to be in any way limiting. There aspects, features, and advantages of the devices, processes, and other subject matter described herein will be become apparent in the teachings set forth herein.

### BRIEF DESCRIPTION OF THE DRAWINGS

For a more complete understanding of the features and advantages of the present invention, reference is now made to the detailed description of the invention along with the accompanying figures and in which:
FIG. 1 shows a side view of a helicopter according to a preferred embodiment of the present application;
FIG. 2 shows a partial cross-section, perspective view of helicopter aircraft according to an alternative embodiment of the present application;
FIG. 3 shows an isometric view of a drive system that depicts the present invention;
FIG. 4 shows an isometric view of the gears of the engine reduction gearboxes of the present invention;
FIG. 5 shows a contralateral, isometric view of the gears of the engine reduction gearboxes of the present invention; and
FIG. 6 shows a method of providing redundant power to a main rotor gearbox from two or more engines of the present invention.

### DETAILED DESCRIPTION OF THE INVENTION

Illustrative embodiments of the system of the present application are described below. In the interest of clarity, not all features of an actual implementation are described in this specification. It will of course be appreciated that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

In the specification, reference may be made to the spatial relationships between various components and to the spatial orientation of various aspects of components as the devices are depicted in the attached drawings. However, as will be recognized by those skilled in the art after a complete reading of the present application, the devices, members, apparatuses, etc. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

The present invention addresses the problems with drive systems in use today that are known to lead to rotorcraft failure. More particularly, the drive system of the present invention was designed to overcome drive system failures by including one or more of the following design features: (1) minimize the number of single drive system components; (2) provide maximum system separation and redundancy; (3) minimize maintenance requirements and maintenance related incidents; (4) minimize the potential of loss of lubrication events; and/or (5) maximize main rotor gearbox loss of lubrication capability. The rotorcraft drive system described herein includes, e.g., dual engine reduction gearboxes completely isolated from the remainder of drive system via freewheeling clutches in the main rotor gearbox, dual accessory gearboxes separate from the main rotor gearbox, and the distribution of the gearbox driven accessories among the separate systems, among other improvements.

The present invention was developed to address the failures common to rotorcraft drive systems and is based on a completely new design and application of new technology to rotorcraft safety. More particularly, the new rotorcraft drive system is focused in an unparalleled manner on safety. The goal of safety drove the design and development of the unique layout and configuration of the rotorcraft drive system described herein, which incorporates unique features and system separation that protects primary aircraft systems from the most common drive system failures. The drive system has also been designed to maximize the operational capability in the event of an uncommon failure, such as a loss of lubrication.

Moreover, the present inventors recognized that high-speed gearing and the associated heat generation is always an area of concern for gearbox survivability. The ability to continue torque transmission, particularly in a loss of lubrication scenario, is of great importance. For this reason, the drive system described herein includes two separate engine revolution per minute (RPM) reduction gearboxes (RGB's), each one connected to a separate engine. The reduction gearboxes are fully self-contained and separate from each other, each reducing the engine output speed from 21,000 RPM to approximately 6,000 RPM prior to transmitting torque to the Main Rotor Gearbox (MRGB). With this drive system arrangement, high-speed gearing is contained in separate gearboxes, as such, the survivability of the total drive system is greatly enhanced, particularly in the event of high-speed gear failure or loss of lubricant in an individual RGB.

According to one embodiment, the MRGB has additional unique features including with the low speed (approx. 6,000 RPM) input. The use of independent RGBs that connect to a single low speed overhung planetary gear system in the MRGB reduces rotating part count and heat generation. Low gear count is achieved by the use of compound gears that incorporate compartmentalized lubrication recovery elements and one or more independent and monitored chip detectors. With maintenance in mind, the drive system allows for a short mast top case assembly that can also be used that allows swapping of the top case and mast without removal of the main rotor gearbox from the aircraft.

High-speed gearing and the associated heat generation is always an area of concern for gearbox survivability. The ability to continue torque transmission, particularly in a loss of lubrication scenario is of great importance. For this reason, the present invention includes a powertrain for a rotorcraft that includes two separate engine reduction gearboxes (RGB), e.g., one RGB for each engine of a two-engine rotorcraft. The reduction gearboxes are fully self-contained and separate from each other, reducing the engine output speed from 21,000 RPM to approximately 6000 RPM prior to transmitting torque to the main rotor gearbox (MRGB). This rotational speed reduction is accomplished with, e.g., a simple three (3)-gear reduction. The rotational reduction can be accomplished with 3, 4, 5, 6 or more gears; however, a three gear system provided the requisite reduction. Each RGB has its own self-contained lubrication system consisting of pump, filter, oil monitoring sensors, and a unique core in the aircraft cooler assembly.

With this arrangement, where high-speed gearing is contained in separate gearboxes, the survivability of the total drive system is greatly enhanced, particularly in the event of high speed gear failure or loss of lubricant in an individual RGB.

The Main Rotor Gearbox (MRGB) transmits torque from the Reduction Gearboxes (RGB) to the main rotor mast, the accessory gearboxes, the hydraulic pump and generator that is mounted to the MRGB, and to the tail rotor drive shaft.

The drive system of the present invention can also take advantage of a number of additional features that minimize the possibility of loss of lubricant and to maximize the operational time if a loss of lubricant event does occur. For example, the drive system can also include one or more of the following: (1) the use of transfer tubes for cooler and filter mounting to eliminate the loss of lubricant in the event of loss of attachment fastener torque; (2) using an oil cooler mounted directly to the main rotor gearbox eliminating external hoses; (3) the use of all oil filter bowls are screw-on instead of held-on with small fasteners eliminating fastener failure issue from repeated removals; (4) the elimination of a high speed planetary and the heat generation associated with it during a loss of lubrication event; (5) the use of gear tooth geometry specifically designed to minimize sliding reducing heat generation at the teeth and the tendency to score during a loss of lubrication event; (6) the use of coarse pitch power gears with clearance or backlash allowing for the expansion during high heat loss of lubrication events; (7) the use of high hot hardness material utilized for primary torque carrying components maximizing their continued operation in the event of a loss of lubrication event; (8) the use of ring gear and case joint design to efficiently transmit heat away from the planetary gears in the event of a loss of lubrication event; and/or (9) the use of isotropic super finished gear teeth resulting in a greatly improved surface finish and maximizing the ability of these gears to operate in a reduced lubrication environment.

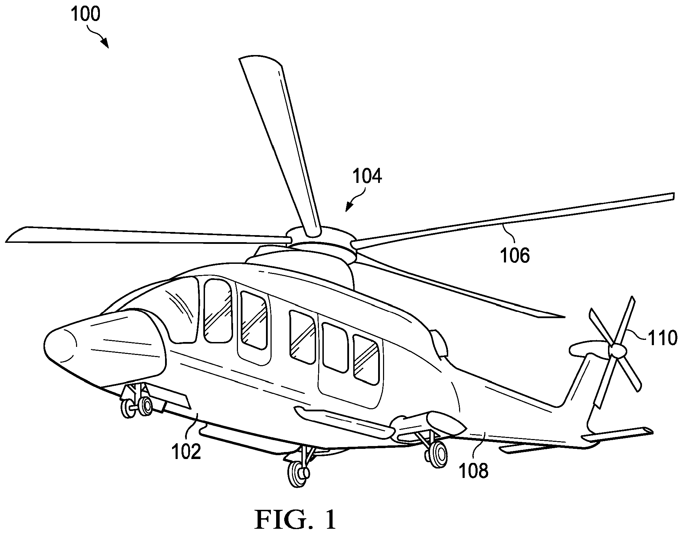

FIG. 1 shows an aircraft 100 in accordance with a preferred embodiment of the present application. In the exemplary embodiment, aircraft 100 is a helicopter having a fuselage 102 and a rotor system 104 carried thereon. A plurality of rotor blades 106 is operably associated with a rotor system 104 for creating flight. A tail boom 108 is depicted that further includes tail rotor 110.

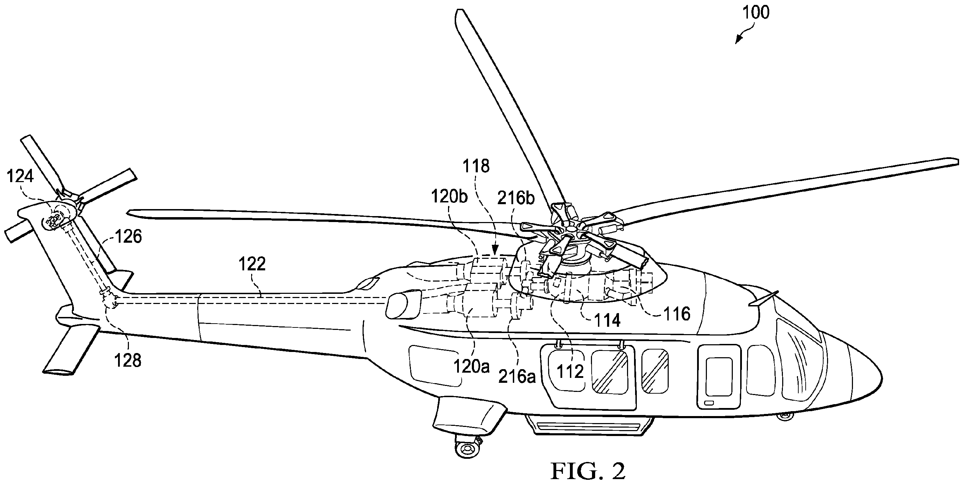

For example, FIG. 2 shows a partial cross-section perspective view of aircraft 100 that includes additional detail of an embodiment of the present invention. Aircraft 100 further includes a rotor mast 112, which is connected to the main rotor gearbox 114. The main rotor gearbox 114 is connected to one or more accessory gear boxes 116 and one or more reduction gearboxes 216a, 216b. Each reduction gearbox 216a, 216b is connected to one or more engines 120a, 120b, which are within an engine compartment 118. A tail rotor drive shaft 122 transmits mechanical rotation from the main rotor gearbox 114 to the tail rotor gear box 124, which is connected via tail rotor drive shaft 126 and intermediate gear box 128.

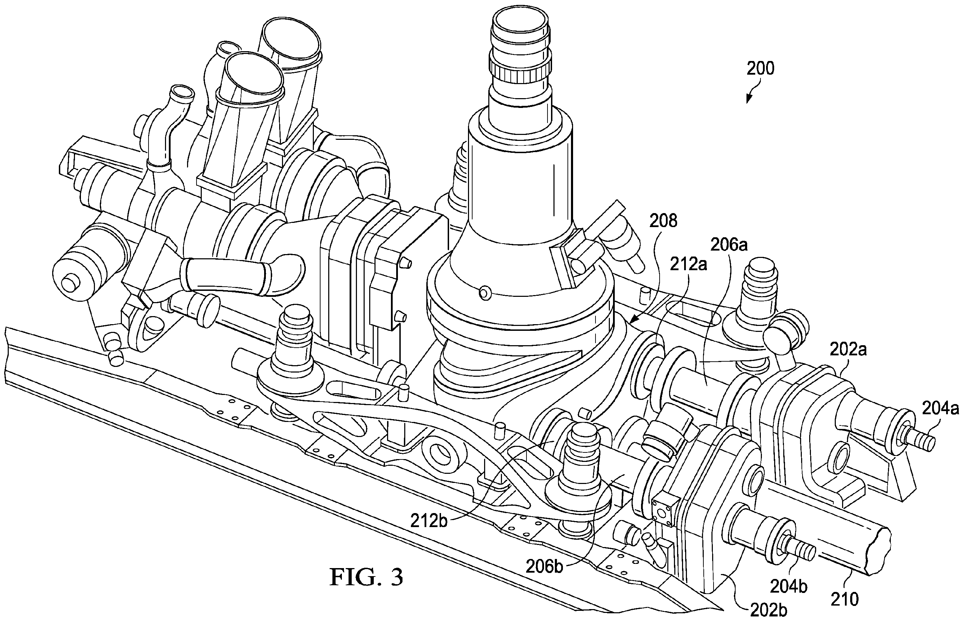

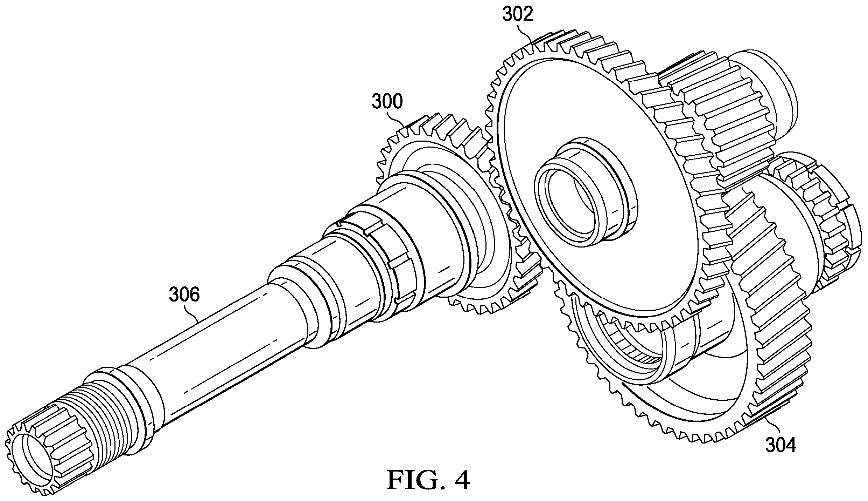

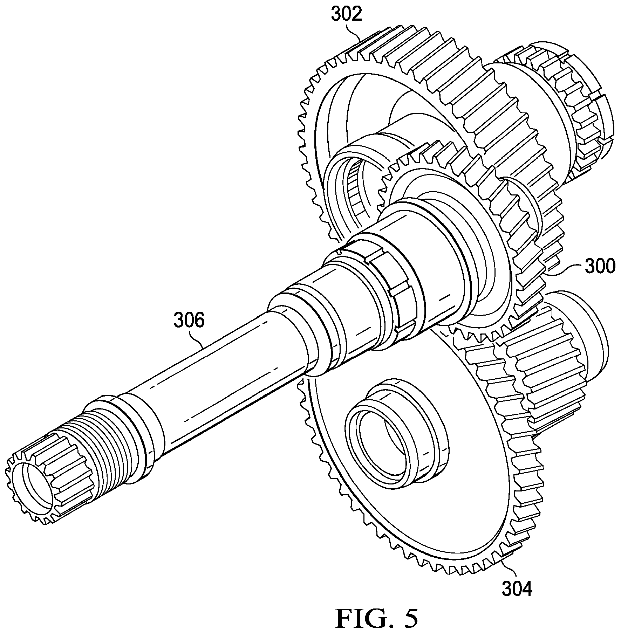

FIG. 3 shows an isometric view of a drive system 200 that provides maximum system separation and redundancy. Drive system 200 include two engine reduction gearboxes 202a, 202b, that are each depicted with an engine connection shaft 204a, 204b. Further, as depicted, the engine reduction gearboxes 202a, 202b are not connected to accessory, such as a generator, a blower, a pump or other accessory that draws power from the engine reduction gearboxes 202a, 202b. Each of the engine reduction gearboxes 202a, 202b is connected via a shaft 206a, 206b, to the main rotor gear box 208. Thus, the each of the engine connection shaft 204a, 204b provides a single load path from the engines to the main rotor gear box 208. Further, each of the engine reduction gearboxes 202a, 202b reduces the speed of rotation from the engine (e.g., up to about 21,000 RPM) to a lower speed (e.g., 6,000 RPM) prior to entering the main rotor gear box 208. Thus, the main rotor gearbox 208 can be designed to operate with components that are turning at a much lower speed. The drive system 200 also connects to the rail rotor via a tail rotor shaft 210. Each of the engine connection shaft 204a, 204b can further include, e.g., a brake, a clutch, or other mechanisms for connecting and disconnecting the engine reduction gearboxes 202a, 202b from the main rotor gear box 208. Each of the shafts 206a, 206b can connect via clutches 212a, 212b, depicted here on the main rotor gear box 208, however, the skilled artisan will recognize that the clutches 212a, 212b could also be positioned on the engine reduction gearboxes 202a, 202b or even between the engine reduction gearboxes 202a, 202b and the main rotor gear box 208, or combinations of the same. The shafts 206a, 206b can be, e.g., a one-piece drive shaft with integral couplings and anti-flail protection. The shafts 206a, 206b can be a single material or be a composite material. FIG. 4 shows an isometric view of the gears 300, 302, 304, and shaft 306 of the first engine reduction gearbox. Input shaft 306 connects to the engine. Input shaft 306 is the same for either a right or left engine reduction gearbox. Shaft 306 connects to gear 300. The gear 300 connects to gear 302, which is an idler gear. Finally, gear 304 is an output gear, that when connected via gear 302 (idler gear), reduces the speed of rotation from gear 300 (input gear) to gear 304 (output gear). Gears 300 through 304 allow for control of speed and torque exiting the engine reduction gearbox. FIG. 5 shows a contralateral, isometric view of the gears 300, 302, 304, and shaft 306 of the second engine reduction gearbox. Input shaft 306 connects to the engine. Input shaft 306 is the same for either a right or left engine reduction gearbox. Shaft 306 connects to gear 300. The gear 300 connects to gear 302, which is an idler gear. Finally, gear 304 is an output gear, that when connected via gear 302 (idler gear), reduces the speed of rotation from gear 300 (input gear) to gear 304 (output gear). Gears 300 through 304 allow for control of speed and torque exiting the engine reduction gearbox.

The present invention can use a simple two-mesh reduction for reducing engine output speed to a low MRGB input speed. Further, each reduction gearbox includes 3 gears, supporting bearings, and an internal oil pump. In addition, the reduction gearbox has no accessories driven by gearbox (e.g., generators, fans, pumps, etc.). The reduction gearbox can also include, e.g., a fuzz burning chip detector at oil pump inlet. Another advantage of the present invention includes that each Reduction Gearbox contains its own independent lube system, thereby providing a redundant fail-safe in case of lubrication failure. Finally, engine input can include a one piece splined shaft 306 piloted at each end.

In one example, each of the independent reduction gearboxes (RGB's) transmit torque from the engines to the main rotor gearbox while reducing speed from, e.g., 21,000, or less, to 6,000, or less, RPM. In another example, the RGB's transmit torque from the engines to the main rotor gearbox while reducing speed from, e.g., 21,000, or more, to 6,000, or more, RPM. This removes high speed gears and bearings from the main rotor gearbox, and also provide independent power to the main rotor gearbox if either the engine or a reduction gearbox fails. Removing high speed gears from the main rotor gearbox increases the performance of the gearbox in a loss of lube situation.

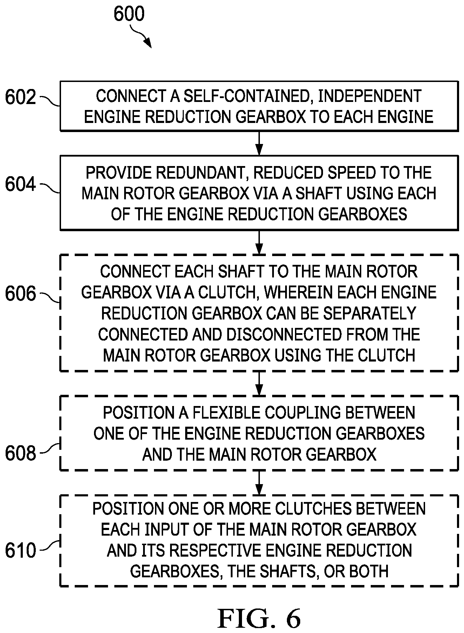

FIG. 6 shows a method 600 of providing redundant power to a main rotor gearbox from two or more engines of the present invention. A self-contained, independent engine reduction gearbox is connected to each engine is provided in block 602. Redundant, reduced speed is provided to the main rotor gearbox via a shaft using each of the engine reduction gearboxes in block 604. Optionally, each shaft is connected to the main rotor gearbox via a clutch in block 606. Each engine reduction gearbox can be separately connected and disconnected from the main rotor gearbox using the clutch. Optionally, a flexible coupling is positioned between one of the engine reduction gearboxes and the main rotor gearbox in block 608. Optionally, one or more clutches are positioned between each input of the main rotor gearbox and its respective engine reduction gearboxes, the shafts, or both in block 610.

Each shaft can be a one-piece shaft with integral couplings and an anti-flail protection system. The two engine reduction gearboxes do not provide power to any accessories. At least one gear of each of the two engine reduction gearboxes can connect to the engine via a one-piece splined shaft piloted at each end.

It will be understood that particular embodiments described herein are shown by way of illustration and not as limitations of the invention. The principal features of this invention can be employed in various embodiments without departing from the scope of the invention as defined by the appended claims.

All of the devices and/or methods disclosed and claimed herein can be made and executed without undue experimentation in light of the present disclosure. While the devices and/or and methods of this invention have been described in terms of preferred emodiments, it will be apparent to those of skill in the art that variations may be applied to the compositions and/or methods and in the steps or in the sequence of steps of the method described herein without departing from the concept and scope of invention as defined by the appended claims.

Furthermore, no limitations are intended to the details of construction or design herein shown, other than as described in the claims below. Accordingly, the protection sought herein is as set forth in the claims below.

## Claims

1. An engine reduction gear system (200), comprising:
at least two self-contained, independent engine reduction gearboxes (202a, 202b), each capable of connecting to an aircraft engine (120a, 120b), wherein each of the engine reduction gearboxes (202a, 202b) provides redundant, reduced speed to a main rotor gearbox (114, 208) via a shaft (206a, 206b);
wherein each of the self-contained, independent engine reduction gearboxes (202a, 202b) is defined as further comprising:
a self-contained lubrication system;
an internal oil pump, oil filter, and oil monitoring system;
wherein each engine reduction gearbox (202a, 202b) can be independently connected and disconnected from the main rotor gearbox (114, 208); and
wherein the two engine reduction gearboxes (202a, 202b) do not provide power to any accessories and **characterized in that** it further comprises an input gear (300), an idler gear (302) connected to the input gear (300), an output gear (304) connected to the idler gear (302), that control the speed and torque exiting each of the reduction gearboxes and that reduce the speed of rotation from the engine (120a, 120b) prior to entering the main rotor gearbox (114, 208), and supporting bearings.

2. A method of providing redundant power to a main rotor gearbox (114, 208) from two or more engines (120a, 120b) comprising:
connecting a self-contained, independent engine reduction gearbox (202a, 202b) to each engine (120a, 120b); and
providing redundant, reduced speed to the main rotor gearbox (114, 208) via a shaft (206a, 206b) using each of the engine reduction gearboxes (202a, 202b); and
wherein each engine reduction gearbox (202a, 202b) further comprises:
an input gear (300), an idler gear (302) connected to the input gear (300), and an output gear (304) connected to the idler gear (302) that control the speed and torque exiting each of the reduction gearboxes and that reduce the speed of rotation from the engine (120a, 120b) prior to entering the main rotor gearbox (114, 208), and supporting bearings;
a self-contained lubrication system;
an internal oil pump, oil filter, and oil monitoring system;
wherein each engine reduction gearbox (202a, 202b) can be independently connected and disconnected from the main rotor gearbox (114, 208); and
wherein the two engine reduction gearboxes (202a, 202b) do not provide power to any accessories.

3. The system of claim 1, wherein each shaft (206a, 206b) connects via a clutch (212a, 212b) to the main rotor gearbox (114, 208), wherein each engine reduction gearbox (202a, 202b) can be separately connected and disconnected from the main rotor gearbox (114, 208) by the clutch (212a, 212b); or
the method of claim 2, further comprising connecting each shaft (206a, 206b) to the main rotor gearbox (114, 208) via a clutch (212a, 212b), wherein each engine reduction gearbox (202a, 202b) can be separately connected and disconnected from the main rotor gearbox (114, 208) using the clutch (212a, 212b).

4. The system of claim 1 or of any preceding system claim, or the method of claim 2 or of any preceding method claim, wherein each shaft (206a, 206b) is defined further as comprising a one-piece shaft with integral couplings and an anti-flail protection system.

5. The system of claim 1 or of any preceding system claim, or the method of claim 2 or of any preceding method claim, wherein the three or more gears (300, 302, 304) comprise a two mesh reduction for reducing engine output speed to a lower main rotor gearbox input speed.

6. The system of claim 1 or of any preceding system claim, wherein a flexible coupling is positioned between one of the engine reduction gearboxes (202a, 202b) and the main rotor gearbox (114, 208); or
the method of claim 2 or of any preceding method claim, further comprising positioning a flexible coupling between one of the engine reduction gearboxes (202a, 202b) and the main rotor gearbox (114, 208).

7. The system of claim 1 or of any preceding system claim, wherein each of the two engine reduction gearboxes (202a, 202b), the shafts (206a, 206b), or both are connected to the main rotor gearbox (114, 208) via a clutch (212a, 212b); or
the method of claim 2 or of any preceding method claim, further comprising positioning one or more clutches (212a, 212b) between each input of the main rotor gearbox (114, 208) and its respective engine reduction gearboxes (202a, 202b), the shafts(206a, 206b), or both.

8. The system of claim 1 or of any preceding system claim, or the method of claim 2 or any preceding method claim, wherein at least one gear (300, 302, 304) of each of the two engine reduction gearboxes (202a, 202b) connects to the engine (120a, 120b) via a one piece splined shaft piloted at each end.

9. The system of claim 1 or of any preceding system claim, further comprising:
a fuselage (102); and
one or more aircraft engines (120a, 120b) in or on the fuselage (102);
wherein the engine speed is reduced prior to entering the main rotor gearbox (114, 208).

## Patentansprüche

1. Triebwerks-Untersetzungsgetriebesystem (200), umfassend:
mindestens zwei eigenständige, unabhängige Triebwerks-Untersetzungsgetriebe (202a, 202b), die jeweils in der Lage sind, an ein Flugtriebwerk (120a, 120b) angeschlossen zu werden, wobei jedes der Triebwerks-Untersetzungsgetriebe (202a, 202b) eine redundante, reduzierte Drehzahl an ein Hauptrotorgetriebe (114, 208) über eine Rotorwelle (206a, 206b) bereitstellt;
wobei jedes der eigenständigen, unabhängigen Triebwerks-Untersetzungsgetriebe (202a, 202b) weiter als Folgendes umfassend definiert ist:
ein eigenständiges Schmierstoffsystem;
ein internes Ölpumpen-, Ölfilter- und Ölüberwachungssystem;
wobei jedes Triebwerks-Untersetzungsgetriebe (202a, 202b) unabhängig von dem Hauptrotorgetriebe (114, 208) angeschlossen und abgetrennt werden kann; und
wobei die beiden Triebwerks-Untersetzungsgetriebe (202a, 202b) keinen Strom an irgendwelche Zubehörteile bereitstellen und **dadurch gekennzeichnet**, das sie weiter ein Antriebsstirnrad (300), ein Laufrad (302), das an dem Antriebsstirnrad (300) angeschlossen ist, ein Abtriebsstirnrad (304), das an dem Laufrad (302) angeschlossen ist, welche die Drehzahl und das Drehmoment steuern, die aus jedem der Triebwerks-Untersetzungsgetriebe austreten, und welche die Drehzahl der Rotation von dem Triebwerk (120a, 120b) vor dem Eintreten in das Hauptrotorgetriebe (114, 208) reduzieren, und Stützlager umfassen.

2. Verfahren zum Bereitstellen von redundantem Strom an ein Hauptrotorgetriebe (114, 208) von zwei oder mehrTriebwerken (120a, 120b), umfassend:
Anschließen eines eigenständigen, unabhängigen Triebwerks-Untersetzungsgetriebes (202a, 202b) an jedes Triebwerk (120a, 120b); und
Bereitstellen einer redundanten, reduzierten Drehzahl an das Hauptrotorgetriebe (114, 208) über eine Rotorwelle (206a, 206b) unter Verwendung von jedem der Triebwerks-Untersetzungsgetriebe (202a, 202b); und
wobei jedes Triebwerks-Untersetzungsgetriebe (202a, 202b) weiter Folgendes umfasst:
ein Antriebsstirnrad (300), ein Laufrad (302), das an dem Antriebsstirnrad (300) angeschlossen ist, und ein Abtriebsstirnrad (304), das an dem Laufrad (302) angeschlossen ist, welche die Drehzahl und das Drehmoment steuern, die aus jedem der Triebwerks-Untersetzungsgetriebe austreten und welche die Drehzahl der Rotation von dem Triebwerk (120a, 120b) vor dem Eintreten in das Hauptrotorgetriebe (114, 208) reduzieren, und Stützlager;
ein eigenständiges Schmierstoffsystem;
ein internes Ölpumpen-, Ölfilter- und Ölüberwachungssystem;
wobei jedes Triebwerks-Untersetzungsgetriebe (202a, 202b) unabhängig von dem Hauptrotorgetriebe (114, 208) angeschlossen und abgetrennt werden kann; und
wobei die beiden Triebwerks-Untersetzungsgetriebe (202a, 202b) keinen Strom an irgendwelche Zubehörteile bereitstellen.

3. System nach Anspruch 1, wobei jede Rotorwelle (206a, 206b) über eine Kupplung (212a, 212b) an das Hauptrotorgetriebe (114, 208) angeschlossen werden kann, wobei jedes Triebwerks-Untersetzungsgetriebe (202a, 202b) durch die Kupplung (212a, 212b) separat an das Hauptrotorgetriebe (114, 208) angeschlossen und von diesem abgetrennt werden kann; oder
Verfahren nach Anspruch 2, weiter umfassend das Anschließen von jeder Rotorwelle (206a, 206b) an das Hauptrotorgetriebe (114, 208) über eine Kupplung (212a, 212b), wobei jedes Triebwerks-Untersetzungsgetriebe (202a, 202b) unter Verwendung der Kupplung (212a, 212b) separat an das Hauptrotorgetriebe (114, 208) angeschlossen und von diesem abgetrennt werden kann.

4. System nach Anspruch 1 oder nach einem vorstehenden Anspruch oder Verfahren nach Anspruch 2 oder nach einem vorstehenden Verfahrensanspruch, wobei jede Rotorwelle (206a, 206b) weiter als eine einteilige Rotorwelle mit integrierten Kupplungsverbindungen und einem Ausschlagschutzsystem umfassend definiert ist.

5. System nach Anspruch 1 oder nach einem vorstehenden Anspruch oder Verfahren nach Anspruch 2 oder nach einem vorstehenden Verfahrensanspruch, wobei die drei oder mehr Antriebsräder (300, 302, 304) eine Zweizahnradreduktion für eine Reduktion der Triebwerks-Abtriebsdrehzahl auf eine niedrigere Hauptrotorgetriebedrehzahl umfassen.

6. System nach Anspruch 1 oder nach einem vorstehenden Anspruch, wobei eine flexible Kupplungsverbindung zwischen einem der Triebwerks-Untersetzungsgetrieben (202a, 202b) und dem Hauptrotorgetriebe (114, 208) positioniert ist; oder
Verfahren nach Anspruch 2 oder nach einem vorstehenden Verfahrensanspruch, weiter umfassend das Positionieren einer flexiblen Kupplungsverbindung zwischen einem der Triebwerks-Untersetzungsgetriebe (202a, 202b) und dem Hauptrotorgetriebe (114, 208).

7. System nach Anspruch 1 oder nach einem vorstehenden Anspruch, wobei jedes der beiden Triebwerks-Untersetzungsgetriebe (202a, 202b), der Rotorwellen (206a, 206b) oder beide über eine Kupplung (212a, 212b) an dem Hauptrotorgetriebe (114, 208) angeschlossen ist/sind; oder
Verfahren nach Anspruch 2 oder nach einem vorstehenden Verfahrensanspruch, weiter umfassend das Positionieren von einer oder mehreren Kupplungen (212a, 212b) zwischen jedem Antrieb des Hauptrotorgetriebes (114, 208) und seinen entsprechenden Triebwerks-Untersetzungsgetrieben (202a, 202b), den Rotorwellen (206a, 206b) oder beiden.

8. System nach Anspruch 1 oder nach einem vorstehenden Anspruch oder Verfahren nach Anspruch 2 oder nach einem vorstehenden Verfahrensanspruch, wobei mindestens ein Antriebsstirnrad (300, 302, 304) von jedem der beiden Triebwerks-Untersetzungsgetrieben (202a, 202b) über eine einteilige Keilwelle, die an jedem Ende gelenkt wird, an das Triebwerk (120a, 120b) angeschlossen werden kann.

9. System nach Anspruch 1 oder nach einem vorstehenden Anspruch, weiter umfassend:
ein Rumpfwerk (102); und
ein oder mehrere Flugtriebwerke (120a, 120b) in oder an dem Rumpfwerk (102);
wobei die Triebwerksdrehzahl vor dem Eintritt in das Hauptrotorgetriebe (114, 208) reduziert wird.

## Revendications

1. Système d'engrenage réducteur pour moteur (200) comprenant :
au moins deux boîtes d'engrenage (202a, 202b) réducteur pour moteur indépendantes autonomes, chacune étant capable de se relier à un moteur d'aéronef (120a, 120b), dans lequel chacune des boîtes d'engrenage réducteur pour moteur (202a, 202b) fournit une vitesse réduite redondante à une boîte d'engrenage de rotor principal (114, 208) via un arbre (206a, 206b) ;
dans lequel chacune des boîtes d'engrenage réducteur pour moteur indépendantes autonomes (202a, 202b) est définie comme comprenant en outre :
un système de lubrification autonome ;
une pompe à huile interne, un filtre à huile et un système de surveillance d'huile ;
dans lequel chaque boîte d'engrenage réducteur pour moteur (202a, 202b) peut être reliée et déconnectée de manière indépendante de la boîte d'engrenage de rotor principal (114, 208) ; et
dans lequel les deux boîtes d'engrenage réducteur pour moteur (202a, 202b) ne fournissent pas de puissance à tout accessoire et **caractérisé en ce qu'**il comprend en outre un engrenage d'entrée (300), un engrenage fou (302) raccordé à l'engrenage d'entrée (300), un engrenage de sortie (304) raccordé à l'engrenage fou (302), qui commandent la vitesse et le couple sortant de chacune des boîtes d'engrenage réducteur et qui réduisent la vitesse de rotation du moteur (120a, 120b) avant d'entrer dans la boîte d'engrenage de rotor principal (114, 208), et des paliers de support.

2. Procédé de fourniture de puissance redondante à une boîte d'engrenage de rotor principal (114, 208) à partir de deux moteurs (120a, 120b) ou plus comprenant :
la liaison d'une boîte d'engrenage (202a, 202b) réducteur pour moteur indépendante autonome avec chaque moteur (120a, 120b) ; et
la fourniture d'une vitesse réduite redondante à la boîte d'engrenage de rotor principal (114, 208) via un arbre (206a, 206b) en utilisant chacune des boîtes d'engrenage réducteur pour moteur (202a, 202b) ; et
dans lequel chaque boîtier d'engrenage réducteur pour moteur (202a, 202b) comprend en outre :
un engrenage d'entrée (300), un engrenage fou (302) raccordé à l'engrenage d'entrée (300), et un engrenage de sortie (304) raccordé à l'engrenage fou (302) qui commandent la vitesse et le couple sortant de chacune des boîtes d'engrenage réducteur et qui réduisent la vitesse de rotation du moteur (120a, 120b) avant d'entrer dans la boîte d'engrenage de rotor principal (114, 208), et des paliers de support ;
un système de lubrification autonome ;
une pompe à huile interne, un filtre à huile, et un système de surveillance d'huile ;
dans lequel chaque boîte d'engrenage réducteur pour moteur (202a, 202b) peut être reliée et déconnectée de manière indépendante de la boîte d'engrenage de rotor principal (114, 208) ; et
dans lequel les deux boîtes d'engrenage réducteur pour moteur (202a, 202b) ne fournissent pas de puissance à tout accessoire.

3. Système selon la revendication 1, dans lequel chaque arbre (206a, 206b) se relie via un embrayage (212a, 212b) à la boîte d'engrenage de rotor principal (114, 208), dans lequel chaque boîte d'engrenage réducteur pour moteur (202a, 202b) peut être reliée et déconnectée séparément de la boîte d'engrenage de rotor principal (114, 208) par l'embrayage (212a, 212b) ; ou
procédé selon la revendication 2, comprenant en outre la liaison de chaque arbre (206a, 206b) avec la boîte d'engrenage de rotor principal (114, 208) via un embrayage (212a, 212b), dans lequel chaque boîte d'engrenage réducteur pour moteur (202a, 202b) peut être reliée et déconnectée séparément de la boîte d'engrenage de rotor principal (114, 208) en utilisant l'embrayage (212a, 212b).

4. Système selon la revendication 1 ou l'une quelconque des revendications précédentes du système, ou procédé selon la revendication 2 ou l'une quelconque des revendications précédentes du procédé, dans lequel chaque arbre (206a, 206b) est en outre défini comme comprenant un arbre en une pièce avec des couplages d'un seul tenant et un système de protection anti-balancement.

5. Système selon la revendication 1 ou l'une quelconque des revendications précédentes du système, ou procédé selon la revendication 2 ou l'une quelconque des revendications précédentes du procédé, dans lequel les trois engrenages (300, 302, 304) ou plus comprennent une réduction à deux engrènements pour la réduction d'une vitesse de sortie de moteur à une vitesse d'entrée de boîte d'engrenage de rotor principal inférieure.

6. Système selon la revendication 1 ou l'une quelconque des revendications précédentes du système, dans lequel un couplage flexible est positionné entre une des boîtes d'engrenage réducteur pour moteur (202a, 202b) et de la boîte d'engrenage de rotor principal (114, 208) ; ou
procédé selon la revendication 2 ou l'une quelconque des revendications précédentes de procédé, comprenant en outre le positionnement d'un couplage flexible entre une des boîtes d'engrenage réducteur pour moteur (202a, 202b) et de la boîte d'engrenage de rotor principal (114, 208).

7. Système selon la revendication 1 ou l'une quelconque des revendications précédentes du système, dans lequel chacun des deux boîtes d'engrenage réducteur pour moteur (202a, 202b), des arbres (206a, 206b), ou les deux sont raccordés à la boîte d'engrenage de rotor principal (114, 208) via un embrayage (212a, 212b) ; ou
procédé selon la revendication 2 ou l'une quelconque des revendications précédentes du procédé, comprenant en outre le positionnement des un ou plusieurs embrayages (212a, 212b) entre chaque entrée de la boîte d'engrenage de rotor principal (114, 208) et ses boîtes d'engrenage réducteur pour moteur (202a, 202b) respectives, des arbres (206a, 206b) ou des deux.

8. Système selon la revendication 1 ou l'une quelconque des revendications précédentes du système, ou procédé selon la revendication 2 ou l'une quelconque des revendications précédentes du procédé, dans lequel au moins un engrenage (300, 302, 304) de chacune des deux boîtes d'engrenage réducteur pour moteur (202a, 202b) se relie au moteur (120a, 120b) via un arbre cannelé en une pièce piloté à chaque extrémité.

9. Système selon la revendication 1 ou l'une quelconque des revendications précédentes du système, comprenant en outre :
un fuselage (102) ; et
un ou plusieurs moteurs d'aéronef (120a, 120b) dans ou sur le fuselage (102) ;
dans lequel la vitesse du moteur est réduite avant d'entrer dans la boîte d'engrenage de rotor principal (114, 208).
